# EUROPEAN PATENT APPLICATION

(11) **EP 4 642 099 A1**
(43) Date of publication of application: **29.10.2025**
(21) Application number: 22968949.2
(22) Date of filing: 22.12.2022
(51) Int. Cl.: H04W 36/24, H04W 36/34, H04W 4/02

(54) **NODE SWITCHING METHOD, AND APPARATUS, DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: Mewburn Ellis LLP
(86) International application number: PCT/CN2022/141088
(87) International publication number: WO 2024/130653

(57) **Abstract**

The present application belongs to the field of communications. Disclosed are a node switching method, and an apparatus, a device, a medium and a program product. The method is executed by a sensing receiving node. The method comprises: when a switching condition is met, switching from a first sensing transmitting node to a second sensing transmitting node. In the method, by means of switching from a first sensing transmitting node to a second sensing transmitting node for transmitting a signal when a switching condition is met, the quality of the signal, which is received by a sensing receiving node, remains in a good state, the continuity of sensing services is ensured, and a sensing target in a continuously moving state is sensed.

## Description

### TECHNICAL FIELD

Embodiments of the present application relate to the field of communications, and in particular, to a node handover method, an apparatus, a device, a medium, and a program product.

### BACKGROUND

Radio electromagnetic wave signals used in cellular networks may be applied not only to wireless data transmission and communication, but also to environmental sensing, for example, action recognition, gesture recognition, breathing monitoring, terminal device movement speed measurement, environmental imaging or weather monitoring.

A sensing transmitting node transmits a radio electromagnetic wave signal to a sensing target, and a sensing receiving node receives and measures a radio electromagnetic wave signal reflected by the sensing target, to obtain sensing results such as a speed, a moving direction and a shape of the sensing target.

However, the sensing target, the sensing transmitting node and the sensing receiving node may all be mobile. When the sensing scenario changes, for example, after a distance between the sensing receiving node and the sensing transmitting node increases, the quality of the radio electromagnetic wave signal received by the sensing receiving node will decrease, resulting in discontinuity of the sensing service.

### SUMMARY

The present application provides a node handover method, an apparatus, a device, a medium and a program product. The technical solutions at least include the following.

According to one aspect of embodiments of the present application, a node handover method is provided. The method is performed by a sensing receiving node and includes:
performing a handover from a first sensing transmitting node to a second sensing transmitting node in a case where a handover condition is met.

According to another aspect of the embodiments of the present application, a node handover method is provided. The method is performed by a first sensing transmitting node and includes:
transmitting third configuration information, where the third configuration information is used to configure a sensing receiving node to perform a handover from the first sensing transmitting node to a second sensing transmitting node in a case where a handover condition is met.

According to another aspect of the embodiments of the present application, a node handover method is provided. The method is performed by a candidate sensing transmitting node and includes:
transmitting second configuration information, where the second configuration information is used to indicate a transmission configuration of a sensing reference signal transmitted by the candidate sensing transmitting node;
where the transmission configuration is used for a sensing receiving node to perform measurement on the sensing reference signal; and in a case where a measurement result of the sensing reference signal meets a handover condition, a handover from a first sensing transmitting node to a second sensing transmitting node is performed, the second sensing transmitting node being one of candidate sensing transmitting nodes.

According to another aspect of the embodiments of the present application, a sensing receiving apparatus is provided. The apparatus includes:
a switching module, configured to perform a handover from a first sensing transmitting apparatus to a second sensing transmitting apparatus in a case where a handover condition is met.

According to another aspect of the embodiments of the present application, a first sensing transmitting apparatus is provided. The apparatus includes:
a first transmitting module, configured to transmit third configuration information, where the third configuration information is used to configure a sensing receiving apparatus to perform a handover from the first sensing transmitting apparatus to a second sensing transmitting apparatus in a case where a handover condition is met.

According to another aspect of the embodiments of the present application, a candidate sensing transmitting apparatus is provided. The apparatus includes:
a second transmitting module, configured to transmit second configuration information, where the second configuration information is used to indicate a transmission configuration of a sensing reference signal transmitted by the candidate sensing transmitting apparatus; where the transmission configuration is used for a sensing receiving node to perform measurement on the sensing reference signal; and in a case where a measurement result of the sensing reference signal meets a handover condition, a handover from a first sensing transmitting apparatus to a second sensing transmitting apparatus is performed, the second sensing transmitting apparatus is one of candidate sensing transmitting apparatuses.

According to another aspect of the embodiments of the present application, a sensing receiving node is provided. The sensing receiving node includes:
a processor;
a transceiver connected to the processor;
a memory configured to store executable instructions of the processor;
where the processor is configured to load and execute the executable instructions, to implement the node handover methods in various aspects described above.

According to another aspect of the embodiments of the present application, a sensing transmitting node is provided. The sensing transmitting node includes:
a processor;
a transceiver connected to the processor;
a memory configured to store executable instructions of the processor;
where the processor is configured to load and execute the executable instructions, to implement the node handover methods in various aspects described above.

According to another aspect of the embodiments of the present application, a computer-readable storage medium is provided. The computer-readable storage medium has at least one instruction, at least one program, a code set or instruction set stored therein, and the at least one instruction, at least one program, the code set or instruction set is loaded and executed by a processor to implement the node handover methods in various aspects described above.

According to another aspect of the embodiments of the present application, a computer program product (or computer program) is provided. The computer program product (or computer program) includes computer instructions, and the computer instructions are stored in a computer-readable storage medium. A processor of a computer device reads the computer instructions from the computer-readable storage medium, and the processor executes the computer instructions, to enable the computer device to perform the node handover methods in various aspects described above.

The technical solutions provided by the embodiments of the present application may have the following beneficial effects.

In the present application, by performing the handover from the first sensing transmitting node to the second sensing transmitting node in a case where the handover condition is met, the quality of the signal received by the sensing receiving node is maintained in a good state, thereby ensuring the continuity of the sensing service and achieving sensing of the sensing target in a continuously moving state.

### BRIEF DESCRIPTION OF THE DRAWINGS

In order to illustrate the technical solutions in the embodiments of the present application more clearly, drawings required in the description of the embodiments will be briefly introduced below. It is apparent that the drawings in the following description are merely some embodiments of the present application. For those of ordinary skill in the art, other drawings can also be obtained according to these drawings without creative efforts.
FIG. 1 illustrates a schematic diagram of a node handover method provided by an exemplary embodiment of the present application.
FIG. 2 illustrates a schematic diagram of a node handover method provided by an exemplary embodiment of the present application.
FIG. 3 illustrates a flowchart of a node handover method provided by an exemplary embodiment of the present application.
FIG. 4 illustrates a flowchart of a node handover method provided by an exemplary embodiment of the present application.
FIG. 5 illustrates a block diagram of a sensing receiving apparatus provided by an exemplary embodiment of the present application.
FIG. 6 illustrates a block diagram of a first sensing transmitting apparatus provided by an exemplary embodiment of the present application.
FIG. 7 illustrates a block diagram of a candidate sensing transmitting apparatus provided by an exemplary embodiment of the present application.
FIG. 8 illustrates a structural schematic diagram of a sensing receiving node and a sensing transmitting node provided by an exemplary embodiment of the present application.

### DETAILED DESCRIPTION

In order to make objectives, technical solutions and advantages of the present application more clearly, implementations of the present application will be further described in detail below with reference to the drawings.

Exemplary embodiments, examples of which are illustrated in the drawings, will be described in detail here. When the following description refers to the drawings, the same numerals in different drawings represent the same or similar elements unless otherwise indicated. The implementations described in the following exemplary embodiments do not represent all implementations consistent with the present application. Rather, they are merely examples of apparatus and methods consistent with some aspects of the present application as recited in appended claims.

The terms used in the present application are merely for the purpose of describing particular embodiments, and are not intended to limit the present application. As used in the present application and the appended claims, the singular forms of "a/an" "the" and "the said" are also intended to include the plural form, unless context clearly indicates otherwise. It should also be understood that the term "and/or" as used herein refers to and includes any or all possible combinations of one or more associated listed items.

It should be noted that user information (including but not limited to user device information, user personal information or the like) and data (including but not limited to data for analysis, stored data, displayed data or the like) involved in the present application are all information and data authorized by users or fully authorized by all parties, and the collection, use and processing of relevant data need to comply with relevant laws, regulations and standards of relevant countries and regions.

It should be understood that although terms first, second or the like may be used in the present application to describe various types of information, and such information should not be limited to these terms. These terms are merely used to distinguish the same type of information from each other. For example, without departing from the scope of the present application, a first parameter may also be referred to as a second parameter, and similarly, a second parameter may also be referred to as a first parameter. Depending on the context, the word "if" as used herein may be interpreted as "when" or "where" or "in response to determining".

The communication and sensing scenarios (that is, communication sensing scenarios) may be divided into Per-Area (sensing area-level) communication sensing scenarios and Per-Object (sensing target-level) communication sensing scenarios, depending on whether sensing requirements are dominated by a specified sensing area or a specified sensing target.

The scenario in which a communication sensing technology is utilized to continuously sense and track a sensed object to obtain dynamic monitoring of the state of the sensed object is referred to as the Per-Object communication sensing scenario.

In intelligent transportation scenarios, continuous tracking of vehicles and real-time dynamic monitoring of vehicle status are achieved based on integrated communication and sensing base stations or cooperation between base stations. For vehicles with wireless communication capabilities, vehicle sensing accuracy may also be improved by means of vehicle cooperative sensing.

In intelligent low-altitude scenarios, drones that have invaded into a supervision range are located and tracked based on the integrated communication and sensing base stations or the cooperation between base stations. For a network-connected drone with wireless communication capabilities, flight status of the drone, roadblocks in the flight path or the like may be identified by means of drone cooperative sensing, to provide auxiliary flight services.

In intelligent life scenarios, by carrying terminals with communication capabilities, breathing monitoring, fitness monitoring, gesture/posture recognition or the like are performed on a specific human body based on an operation mode of cooperation between the base station and the terminal, or self-transmitting and self-receiving of the terminal, or cooperation between the terminals, to achieve accurate real-time dynamic monitoring.

In intelligent network scenarios, the communication sensing technology assists in improving the accuracy of beam management and channel estimation, improving the timeliness of terminal beam tracking, improving the accuracy of channel estimation and reducing feedback overhead.

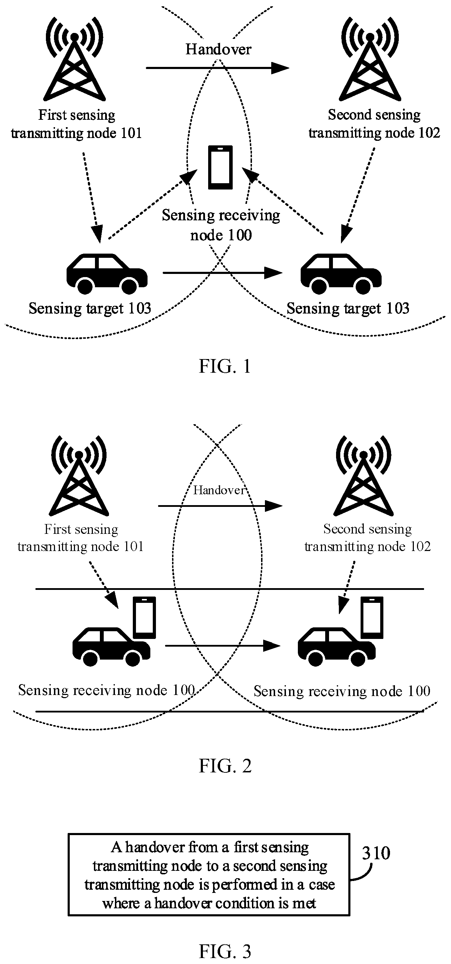

For the Per-Object communication sensing scenario, as illustrated in FIG. 1, in a case where a sensing target 103 is a vehicle, it is necessary to obtain sensing results such as a speed, a distance, a moving direction and a shape of the sensing target 103. Since the sensing target 103 is moving, based on handover conditions such as a position, a distance and a measurement result of a sensing reference signal related to the sensing target 103, a handover form a first sensing transmitting node 101 to a second sensing transmitting node 102 is performed in a case where the handover conditions is met. The first sensing transmitting node 101 is a current sensing transmitting node, and the second sensing transmitting node 102 is one of multiple candidate sensing transmitting nodes that meet the handover conditions.

The scenario that needs to efficiently performing sensing on the real-time state of roads, vehicles and people in factories, roads, low-altitudes, cities or even larger spatio-temporal ranges is referred to as the Per-Area communication sensing scenario.

In intelligent transportation scenarios, the sensing of road environment is achieved based on integrated communication and sensing base stations or cooperation between base stations, construction of high-precision maps is effectively achieved, and beyond-line-of-sight assistance is provided for the safe operation of autonomous vehicles. Based on the integrated communication and sensing base stations or the cooperation between base stations, the detection of the movement trajectory and movement speed of moving vehicles in all-round, all-weather and uninterruptedly is achieved, and the sensing information is uploaded to a processing center to comprehensively improve the intelligent sensing capability of the operation status of highways and provide data support for road supervision. The sensing of railway track environment is achieved based on the integrated communication and sensing base stations, and foreign object intrusion detection around the high-speed railways in all-weather is achieved.

In intelligent low-altitude scenarios, all-round and multi-angle sensing of airspace is performed based on the integrated communication and sensing base stations or the cooperation between base stations, and the sensing results are provided to the drone, which may provide redundancy for obstacle avoidance warning and improve the success rate of drone obstacle avoidance. The entire airspace sensing is performed based on the integrated communication and sensing base stations or the cooperation between base stations, and drones that have invaded into a supervision range are located and tracked, thereby realizing drone intrusion monitoring for fixed areas.

In intelligent life scenarios, breathing monitoring, fitness monitoring, gesture/posture recognition or the like are performed by sensing a change in a wireless channel based on an operation mode of cooperation between the base station and the terminal, or self-transmitting and self-receiving of the terminal or cooperation between the terminals. Based on the integrated communication and sensing base stations or the cooperation between base stations, the signal link attenuation in the communication link is measured, and then the relationship between the signal link attenuation and a weather indicator is analyzed to obtain the corresponding weather indicator for performing weather monitoring.

In intelligent network scenarios, information such as the density and position of idle terminals in the cell is obtained based on the integrated communication sensing base stations or the cooperation between base stations, so as to assist in power saving of base stations in the cell and optimize the base station resource scheduling or the like.

For the Per-Area communication sensing scenario, as illustrated in FIG. 2, it is necessary to perform sensing on the surrounding road environment in a larger spatio-temporal range through a vehicle-mounted sensing receiving node 100. Since the sensing receiving node 100 is moving, based on handover conditions such as a position, a distance and a measurement result of a sensing reference signal related to the sensing receiving node 100, a handover form a first sensing transmitting node 101 to a second sensing transmitting node 102 is performed in a case where the handover conditions are met. The first sensing transmitting node 101 is a current sensing transmitting node, and the second sensing transmitting node 102 is one of multiple candidate sensing transmitting nodes that meet the handover conditions.

In the present application, the sensing service operation process where A transmits and B receives is mainly considered, in which A is a sensing transmitting node, which may be a terminal or a base station; and B is a sensing receiving node, which may be a terminal or a base station.

The term "sensing" in the present application may also be understood as at least one of the following meanings: positioning, ranging, speed measurement, angle measurement, target imaging, target detection, target tracking and target recognition.

FIG. 3 illustrates a flowchart of a node handover method provided by an exemplary embodiment of the present application. The method is performed by a sensing receiving node and includes the following.

**Step 310:** a handover from a first sensing transmitting node to a second sensing transmitting node is performed in a case where a handover condition is met.

The first sensing transmitting node transmits a sensing signal to a sensing target, and the sensing receiving node receives and measures a sensing signal reflected by the sensing target, to obtain sensing results such as a speed, a moving direction or a shape of the sensing target. The first sensing transmitting node is a current sensing transmitting node, the second sensing transmitting node is one of multiple candidate sensing transmitting nodes that meet the handover condition, and the sensing receiving node is a node that receives the sensing signal transmitted by the sensing transmitting node or the sensing signal reflected by the sensing target.

However, at least one of the sensing target, the first sensing transmitting node and the sensing receiving node may be mobile. When the sensing scenario changes, for example, after a distance between the sensing target and the first sensing transmitting node increases, the quality of the sensing signal received by the sensing receiving node will decrease, resulting in discontinuity of the sensing service.

In the present embodiment, the sensing receiving node performs the handover from the first sensing transmitting node to the second sensing transmitting node in a case where the handover condition is met. The handover condition is used to indicate that a sensing reference signal transmitted by the first sensing transmitting node is inferior to a sensing reference signal transmitted by the second sensing transmitting node.

In the present embodiment, the handover condition is used to indicate that the sensing reference signal transmitted by the first sensing transmitting node is inferior to a first condition; or
the handover condition is used to indicate that the sensing reference signal transmitted by the second sensing transmitting node is superior to a second condition; or
the handover condition is used to indicate that the sensing reference signal transmitted by the first sensing transmitting node is inferior to the first condition and the sensing reference signal transmitted by the second sensing transmitting node is superior to the second condition;
where the first condition is equal to or inferior to the second condition.

The handover condition is represented using at least one of following pieces of information on:
a measurement result of a sensing reference signal; or
an absolute sending position or a relative sending position of a sensing reference signal;
where the relative sending position is a position relative to the sensing receiving node, or the relative sending position is a position relative to the sensing target.

The handover condition includes at least one of:
a handover condition related to a measurement result of a sensing reference signal;
a handover condition related to a position;
a handover condition related to a transmission delay; or
a handover condition related to a distance.

The measurement result of the sensing reference signal includes at least one of: a measurement result of the sensing reference signal transmitted by the first sensing transmitting node or a measurement result of the sensing reference signal transmitted by the second sensing transmitting node.

The position includes at least one of: a position of the first sensing transmitting node, a position of the second sensing transmitting node, a position of the sensing receiving node or a position of the sensing target.

The transmission delay includes at least one of: a transmission delay corresponding to a path through which a sensing reference signal is reflected from the first sensing transmitting node to the sensing receiving node via the sensing target, or a transmission delay corresponding to a path through which a sensing reference signal is reflected from the second sensing transmitting node to the sensing receiving node via the sensing target.

The distance includes at least one of: a distance between the sensing receiving node and the first sensing transmitting node, a distance between the sensing receiving node and the second sensing transmitting node, a distance between the sensing target and the first sensing transmitting node, or a distance between the sensing target and the second sensing transmitting node.

The handover condition represented by the absolute sending position or the relative sending position of the sensing reference signal includes at least one of:
a handover condition related to position;
a handover condition related to transmission delay; or
a handover condition related to a distance.

In some embodiments, the above positions and distances may be obtained based on various known positioning technologies or measurement technologies, which are not limited in the present application, such as, the positioning technology of global positioning system, or the positioning technology based on mobile communications.

In some embodiments, the sensing receiving node performs the handover from the first sensing transmitting node to the second sensing transmitting node in a case where one handover condition is met. For example, the sensing receiving node performs the handover from the first sensing transmitting node to the second sensing transmitting node in a case where the handover condition related to the transmission delay is met.

In some embodiments, the sensing receiving node performs the handover from the first sensing transmitting node to the second sensing transmitting node in a case where at least two handover conditions are met. For example, the sensing receiving node performs the handover from the first sensing transmitting node to the second sensing transmitting node in a case where the handover condition related to the position and the handover condition related to the distance are met.

To sum up, in the method provided in the present embodiment, by performing the handover from the first sensing transmitting node to the second sensing transmitting node in a case where the handover condition is met, the quality of the signal received by the sensing receiving node is maintained in a good state, thereby ensuring the continuity of the sensing service and achieving sensing of the sensing target in a continuously moving state.

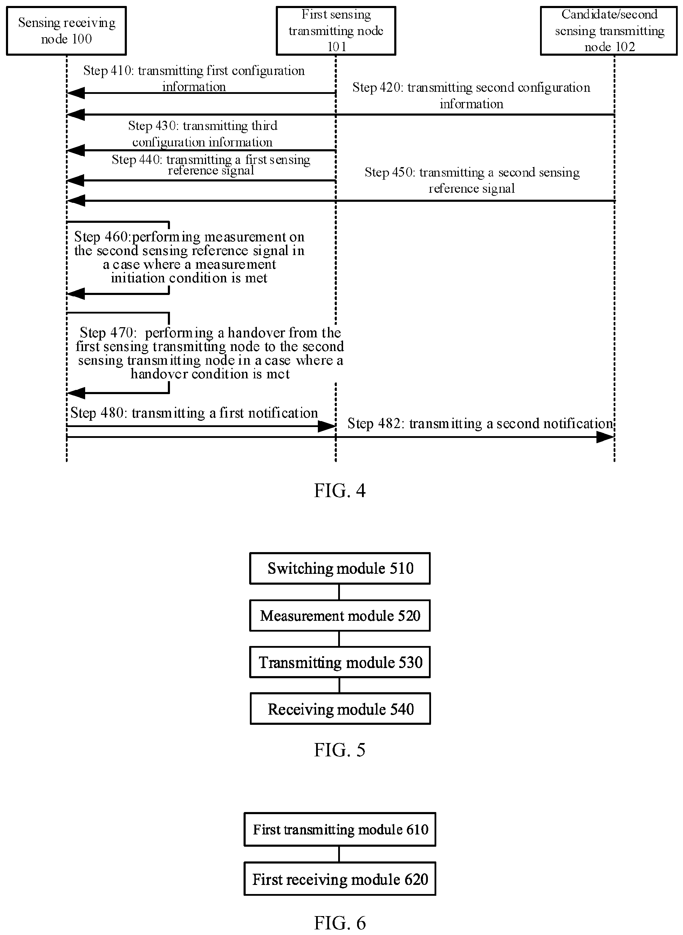

FIG. 4 illustrates a flowchart of a node handover method provided by an exemplary embodiment of the present application. The method is performed by a sensing receiving node 100, a first sensing transmitting node 101 and a second sensing transmitting node 102. The method includes the following.

**Step 410:** the first sensing transmitting node 101 transmits first configuration information.

In the present embodiment, the first sensing transmitting node 101 may be referred to as a source sensing transmitting node or a sensing transmitting node before handover; and the second sensing transmitting node 102 may be referred to as a target sensing transmitting node or a sensing transmitting node after handover.

The first sensing transmitting node 101 transmits the first configuration information to the sensing receiving node, and the sensing receiving node 100 receives the first configuration information. The first configuration information is used to configure the sensing receiving node 100 to perform measurement on a sensing reference signal transmitted by at least one candidate sensing transmitting node in a case where a measurement initiation condition is met. Optionally, the first configuration information carries specific contents of the measurement initiation condition.

The measurement initiation condition is used to indicate that a sensing reference signal transmitted by the first sensing transmitting node is inferior to a third condition.

In the present embodiment, the measurement initiation condition is represented using at least one of following pieces of information on:
a measurement result of the sensing reference signal; or
an absolute sending position or a relative sending position of the sensing reference signal;
where the relative sending position is a position relative to the sensing receiving node, or the relative sending position is a position relative to the sensing target.

The measurement initiation condition includes at least one of:
an initiation condition related to a measurement result of the sensing reference signal transmitted by the first sensing transmitting node 101;
an initiation condition related to a transmission delay corresponding to a path through which a sensing reference signal is reflected from the first sensing transmitting node 101 to the sensing receiving node 100 via the sensing target;
an initiation condition related to a position of the first sensing transmitting node 101;
an initiation condition related to a distance between the first sensing transmitting node 101 and the sensing receiving node 100; or
an initiation condition related to a distance between the first sensing transmitting node 101 and the sensing target.

The measurement initiation condition represented by the absolute sending position or the relative sending position of the sensing reference signal includes at least one of:
the initiation condition related to the transmission delay corresponding to the path through which the sensing reference signal is reflected from the first sensing transmitting node 101 to the sensing receiving node 100 via the sensing target;
the initiation condition related to the position of the first sensing transmitting node 101;
the initiation condition related to the distance between the first sensing transmitting node 101 and the sensing receiving node 100; or
the initiation condition related to the distance between the first sensing transmitting node 101 and the sensing target.

In some embodiments, the sensing receiving node 100 performs measurement on the sensing reference signal transmitted by the at least one candidate sensing transmitting node in a case where one initiation condition is met. For example, the sensing receiving node 100 performs measurement on the sensing reference signal transmitted by the at least one candidate sensing transmitting node in a case where the initiation condition related to the transmission delay corresponding to the path through which the sensing reference signal is reflected from the first sensing transmitting node 101 to the sensing receiving node 100 via the sensing target is met.

In some embodiments, the sensing receiving node 100 performs measurement on the sensing reference signal transmitted by the at least one candidate sensing transmitting node in a case where at least two initiation conditions are met. For example, the sensing receiving node 100 performs measurement on the sensing reference signal transmitted by the at least one candidate sensing transmitting node in a case where the initiation condition related to the position of the first sensing transmitting node 101 and the initiation condition related to the distance between the first sensing transmitting node 101 and the sensing target are met.

**Step 420:** the candidate/second sensing transmitting node 102 transmits second configuration information.

For the sensing receiving node, there may be one or more candidate sensing transmitting nodes. The second sensing transmitting node 102 is one of the multiple candidate sensing transmitting nodes. Before the measurement is completed, it is uncertain that the second sensing transmitting node 102 is a specific sensing transmitting node among the multiple candidate sensing transmitting nodes.

The candidate sensing transmitting node 102 transmits the second configuration information, and the sensing receiving node 100 receives the second configuration information. The second configuration information is used to indicate a transmission configuration of a sensing reference signal transmitted by the candidate sensing transmitting node. The transmitting configuration is used for the sensing receiving node 100 to perform measurement on the sensing reference signal; and in a case where the measurement result of the sensing reference signal meets the handover condition, the handover from the first sensing transmitting node 101 to the candidate sensing transmitting node 102 is performed.

The transmission configuration of the sensing reference signal includes at least one of:
a type of the sensing reference signal;
a transmission start time of the sensing reference signal;
a transmission end time of the sensing reference signal; or
a transmission position of the sensing reference signal. Optionally, the transmission position includes a time domain position or a frequency domain position.

For example, the candidate sensing transmitting node 102 transmits the transmission start time of the sensing reference signal, to indicate that the transmission start time of the sensing reference signal is an x-th slot in each radio frame, where x is an integer.

**Step 430:** the first sensing transmitting node 101 transmits third configuration information.

The first sensing transmitting node 101 transmits the third configuration information, and the sensing receiving node 100 receives the third configuration information. The third configuration information is used to configure the handover condition.

The handover condition includes at least one of:
a handover condition related to a measurement result of a sensing reference signal;
a handover condition related to a position;
a handover condition related to a transmission delay; or
a handover condition related to a distance.

In some embodiments, the sensing receiving node 100 performs the handover from the first sensing transmitting node 101 to the second sensing transmitting node 102 in a case where one handover condition is met. For example, the sensing receiving node 100 performs the handover from the first sensing transmitting node 101 to the second sensing transmitting node 102 in a case where the handover condition related to the transmission delay is met.

In some embodiments, the sensing receiving node 100 performs the handover from the first sensing transmitting node 101 to the second sensing transmitting node 102 in a case where at least two handover conditions are met. For example, the sensing receiving node 100 performs the handover from the first sensing transmitting node 101 to the second sensing transmitting node 102 in a case where the handover condition related to the position and the handover condition related to the distance are met.

**Step 440:** the first sensing transmitting node 101 transmits a first sensing reference signal.

The first sensing transmitting node 101 transmits the first sensing reference signal, and the sensing receiving node 100 receives the first sensing reference signal. The sensing receiving node 100 performs measurement on the first sensing reference signal transmitted by the first sensing transmitting node 101, in which the obtained measurement result is used to determine whether to switch the sensing transmitting node.

**Step 450:** the second sensing transmitting node 102 transmits a second sensing reference signal.

The second sensing transmitting node 102 transmits the second sensing reference signal, and the sensing receiving node 100 receives the second sensing reference signal. The sensing receiving node 100 performs measurement on the second sensing reference signal transmitted by the second sensing transmitting node 102, in which the obtained measurement result is used to determine whether to switch the sensing transmitting node.

The second sensing transmitting node 102 is selected from at least two candidate sensing transmitting nodes that meet the handover condition based on a selection condition, where the selection condition includes at least one of:
a candidate sensing transmitting node with a largest measurement result of a sensing reference signal;
a candidate sensing transmitting node with a smallest transmission delay corresponding to a path through which a sensing reference signal is reflected from the candidate sensing transmitting node to the sensing receiving node 100 via the sensing target;
a candidate sensing transmitting node with a shortest distance to the sensing receiving node 100;
a candidate sensing transmitting node with a shortest distance to a sensing target; or
any one of candidate sensing transmitting nodes.

For example, the candidate sensing transmitting nodes include the second sensing transmitting node 102 and a third sensing transmitting node. For the transmission delay corresponding to the path through which the sensing reference signal is reflected from the candidate sensing transmitting node to the sensing receiving node 100 via the sensing target, a transmission delay corresponding to the second sensing transmitting node 102 is 30 milliseconds, and a transmission delay corresponding to the third sensing transmitting node is 60 milliseconds. The transmission delay corresponding to the second sensing transmitting node 102 is the smallest, and the second sensing transmitting node 102 is selected.

**Step 460:** the sensing receiving node 100 performs measurement on the second sensing reference signal in a case where the measurement initiation condition is met.

The sensing receiving node 100 performs measurement on a sensing reference signal transmitted by at least one candidate sensing transmitting node in the case where the measurement initiation condition is met, where the second sensing transmitting node 102 is one of the at least one candidate sensing transmitting node.

The measurement initiation condition includes at least one of:
an initiation condition related to the measurement result of the sensing reference signal transmitted by the first sensing transmitting node 101;
an initiation condition related to the transmission delay corresponding to the path through which the sensing reference signal is reflected from the first sensing transmitting node 101 to the sensing receiving node 100 via the sensing target;
an initiation condition related to a position of the first sensing transmitting node 101;
an initiation condition related to a distance between the first sensing transmitting node 101 and the sensing receiving node 100; or
an initiation condition related to a distance between the first sensing transmitting node 101 and a sensing target.

(1) The initiation condition related to the measurement result of the sensing reference signal transmitted by the first sensing transmitting node 101 includes:
   the measurement result of the sensing reference signal transmitted by the first sensing transmitting node 101 being less than a thirteenth threshold.

The measurement result of the sensing reference signal includes at least one of:
an average measurement result corresponding to the sensing reference signal on one path component;
an average measurement result corresponding to the sensing reference signal on a plurality of path components; or
an average measurement result corresponding to the sensing reference signal on all path components.

In one case, the sensing reference signal is transmitted from the sensing transmitting node, and received by the sensing receiving node 100 through a direct path.

In another case, the sensing reference signal is transmitted from the sensing transmitting node, reflected by objects in the surrounding environment and the sensing target, and then received by the sensing receiving node 100. In this case, the sensing reference signal will carry information related to the sensing target and the surrounding environment. For the sensing services, what needs to be paid attention to and measured is the sensing reference signal under this case. Therefore, the measurement results of the sensing reference signal need to exclude a direct path component between the sensing transmitting node and the sensing receiving node 100. The direct path component between the sensing transmitting node and the sensing receiving node 100 is usually the first path (that is, the first arrival path) ordered by time.

The measurement result of the sensing reference signal includes at least one of: a linear average result of channel response power on one path component; a linear average result of channel response power on multiple path components; or a linear average result of channel response power on all path components.

The type of the measurement result of the sensing reference signal includes at least one of: reference signal received power (RSRP), signal to interference and noise ratio (SINR), reference signal received quality (RSRQ), or reference signal received path power (RSRPP). RSRP is a parameter representing the wireless signal strength, SINR is a ratio of the strength of the received useful signal to the strength of the received noise and interference, RSRQ is a ratio of RSRP to the carrier received signal strength indication (RSSI), and RSRPP is defined as a linear average result of the channel response power of the resource elements of the reference signal configured for measurement on the i-th path component, where i is a positive integer.

For example, in a case where the RSRP transmitted by the first sensing transmitting node 101 is -100 deciBel relative to one milliwatt (dBm) and the thirteenth threshold is -80 dBm, the RSRP transmitted by the first sensing transmitting node 101 is less than the thirteenth threshold. Therefore, the measurement initiation condition is met, and measurement is performed on the second sensing reference signal.

(2) The initiation condition related to the transmission delay corresponding to the path through which the sensing reference signal is reflected from the first sensing transmitting node 101 to the sensing receiving node 100 via the sensing target includes:
a first transmission delay being greater than a fourteenth threshold;
where the first transmission delay is the transmission delay corresponding to the path through which the sensing reference signal is reflected from the first sensing transmitting node 101 to the sensing receiving node 100 via the sensing target.

For example, the fourteenth threshold is 60 milliseconds, and the first transmission delay is 100 milliseconds, which is greater than the fourteenth threshold. Therefore, the measurement initiation condition is met, and measurement is performed on the second sensing reference signal.

(3) The initiation condition related to the position of the first sensing transmitting node 101 includes at least one of:
a position of the sensing target leaving a first area;
a position of the sensing receiving node 100 leaving a first area; or
a position of the sensing target leaving a first area and a position of the sensing receiving node 100 leaving the first area;
where the first area corresponds to the position of the first sensing transmitting node 101.

For example, in a case where the position of the sensing target leaves the first area corresponding to the position of the first sensing transmitting node 101, the initiation condition is met, and measurement is performed on the sensing reference signal transmitted by the second sensing transmitting node 102.

(4) The initiation condition related to the distance between the first sensing transmitting node 101 and the sensing receiving node 100 includes:
the distance between the first sensing transmitting node 101 and the sensing receiving node 100 being greater than a fifteenth threshold.

For example, the fifteenth threshold is 100 meters, and the distance between the first sensing transmitting node 101 and the sensing receiving node 100 is 200 meters, which is greater than the fifteenth threshold. Therefore, the initiation condition is met, and measurement is performed on the sensing reference signal transmitted by the second sensing transmitting node 102.

(5) The initiation condition related to the distance between the first sensing transmitting node 101 and the sensing target includes:
the distance between the first sensing transmitting node 101 and the sensing target being greater than a sixteenth threshold.

For example, the sixteenth threshold is 300 meters, and the distance between the first sensing transmitting node 101 and the sensing target is 500 meters, which is greater than the sixteenth threshold. Therefore, the initiation condition is met, and measurement is performed on the sensing reference signal transmitted by the second sensing transmitting node 102.

**Step 470:** the sensing receiving node 100 performs the handover from the first sensing transmitting node 101 to the second sensing transmitting node 102 in a case where the handover condition is met.

In the present embodiment, the handover condition is used to indicate that the sensing reference signal transmitted by the first sensing transmitting node is inferior to the sensing reference signal transmitted by the second sensing transmitting node.

The handover condition is used to indicate that the sensing reference signal transmitted by the first sensing transmitting node is inferior to a first condition; or
the handover condition is used to indicate that the sensing reference signal transmitted by the second sensing transmitting node is superior to a second condition; or
the handover condition is used to indicate that the sensing reference signal transmitted by the first sensing transmitting node is inferior to a first condition and the sensing reference signal transmitted by the second sensing transmitting node is superior to a second condition;
where the first condition is equal to or inferior to the second condition, and the first condition is inferior to the third condition.

For example, in a case where the first condition is that the RSRP is -90dBm and the RSRP transmitted by the first sensing transmitting node 101 is -100dBm, -100dBm is less than -90dBm. Therefore, the handover condition is met.

The handover condition is represented using at least one of following pieces of information on:
a measurement result of the sensing reference signal; or
an absolute sending position or a relative sending position of the sensing reference signal;
where the relative sending position is a position relative to the sensing receiving node, or the relative sending position is a position relative to the sensing target.

The handover condition includes at least one of:
a handover condition related to a measurement result of a sensing reference signal;
a handover condition related to a position;
a handover condition related to a transmission delay; or
a handover condition related to a distance.

The measurement result of the sensing reference signal includes at least one of: a measurement result of the sensing reference signal transmitted by the first sensing transmitting node 101 or a measurement result of the sensing reference signal transmitted by the second sensing transmitting node 102.

The position includes at least one of: a position of the first sensing transmitting node 101, a position of the second sensing transmitting node 102, a position of the sensing receiving node 100 or a position of a sensing target.

The transmission delay includes at least one of: a transmission delay corresponding to a path through which a sensing reference signal is reflected from the first sensing transmitting node 101 to the sensing receiving node 100 via the sensing target, or a transmission delay corresponding to a path through which a sensing reference signal is reflected from the second sensing transmitting node 102 to the sensing receiving node 100 via the sensing target.

The distance includes at least one of: a distance between the sensing receiving node 100 and the first sensing transmitting node 101, a distance between the sensing receiving node 100 and the second sensing transmitting node 102, a distance between the sensing target and the first sensing transmitting node 101, or a distance between the sensing target and the second sensing transmitting node 102.

The handover condition represented by the absolute sending position or the relative sending position of the sensing reference signal includes at least one of:
the handover condition related to the position;
the handover condition related to the transmission delay; or
the handover condition related to the distance.

(1) The handover condition related to the measurement result of the sensing reference signal includes at least one of:
   the measurement result of the sensing reference signal transmitted by the first sensing transmitting node 101 being less than a first threshold;
   the measurement result of the sensing reference signal transmitted by the second sensing transmitting node 102 being greater than a second threshold;
   the measurement result of the sensing reference signal transmitted by the first sensing transmitting node 101 being less than a first threshold, and the measurement result of the sensing reference signal transmitted by the second sensing transmitting node 102 being greater than a second threshold; or
   a difference between the measurement result of the sensing reference signal transmitted by the second sensing transmitting node 102 and the measurement result of the sensing reference signal transmitted by the first sensing transmitting node 101 being greater than a third threshold.

For example, in a case where the first threshold is -80dBm and the RSRP transmitted by the first sensing transmitting node 101 is -100dBm, the RSRP is less than the first threshold. Therefore, the handover condition is met, and the handover from the first sensing transmitting node 101 to the second sensing transmitting node 102 is performed.

(2) The handover condition related to the position includes at least one of:
the position of the sensing target moving from a first area to a second area;
the position of the sensing receiving node 100 moving from a first area to a second area; or
the position of the sensing target moving from a first area to a second area, and the position of the sensing receiving node 100 moving from the first area to the second area;
where the first area corresponds to the position of the first sensing transmitting node 101, and the second area corresponds to the position of the second sensing transmitting node 102.

For example, in a case where the position of the sensing target moves from the first area corresponding to the position of the first sensing transmitting node 101 to the second area corresponding to the position of the second sensing transmitting node 102, the handover condition is met, and the handover from the first sensing transmitting node 101 to the second sensing transmitting node 102 is performed.

(3) The handover condition related to the transmission delay includes at least one of:
a first transmission delay being greater than a fourth threshold;
a second transmission delay being less than a fifth threshold;
a first transmission delay being greater than a fourth threshold, and a second transmission delay being less than a fifth threshold; or
a difference between a first transmission delay and a second transmission delay being greater than a sixth threshold;
where the first transmission delay is the transmission delay corresponding to the path through which the sensing reference signal is reflected from the first sensing transmitting node to the sensing receiving node via the sensing target, and the second transmission delay is the transmission delay corresponding to the path through which the sensing reference signal is reflected from the second sensing transmitting node to the sensing receiving node via the sensing target.

For example, the sixth threshold is 0, the first transmission delay is 100 milliseconds, the second transmission delay is 50 milliseconds, and the difference between the first transmission delay and the second transmission delay is 50 milliseconds, which is greater than 0. Therefore, the handover condition is met, and the handover from the first sensing transmitting node 101 to the second sensing transmitting node 102 is performed.

(4) The handover condition related to the distance includes at least one of:
the distance between the sensing receiving node 100 and the first sensing transmitting node 101 being greater than a seventh threshold;
the distance between the sensing receiving node 100 and the second sensing transmitting node 102 being less than an eighth threshold;
the distance between the sensing receiving node 100 and the first sensing transmitting node 101 being greater than a seventh threshold, and the distance between the sensing receiving node 100 and the second sensing transmitting node 102 being less than an eighth threshold;
a difference between the distance between the sensing receiving node 100 and the first sensing transmitting node 101 and the distance between the sensing receiving node 100 and the second sensing transmitting node 102 being greater than a ninth threshold;
the distance between the sensing target and the first sensing transmitting node 101 being greater than a tenth threshold;
the distance between the sensing target and the second sensing transmitting node 102 being less than an eleventh threshold;
the distance between the sensing target and the first sensing transmitting node 101 being greater than a tenth threshold, and the distance between the sensing target and the second sensing transmitting node 102 being less than an eleventh threshold; or
a difference between the distance between the sensing target and the first sensing transmitting node 101 and the distance between the sensing target and the second sensing transmitting node 102 being greater than a twelfth threshold.

For example, the ninth threshold is 0, the distance between the sensing receiving node 100 and the first sensing transmitting node 101 is 100 meters, the distance between the sensing receiving node 100 and the second sensing transmitting node 102 is 50 meters, and the difference between 100 meters and 50 meter is 150 meters, which is greater than 0. Therefore, the handover condition is met, and the handover from the first sensing transmitting node 101 to the second sensing transmitting node 102 is performed.

**Step 480:** the sensing receiving node 100 transmits a first notification.

In some embodiments, the sensing receiving node 100 transmits the first notification, and the first sensing transmitting node 101 receives the first notification. The first notification is used to notify the first sensing transmitting node to stop transmitting the sensing reference signal.

**Step 482:** The sensing receiving node 100 transmits a second notification.

In some embodiments, the sensing receiving node 100 transmits the second notification, and the second sensing transmitting node 102 receives the second notification. The second notification is used to notify the second sensing transmitting node that the sensing receiving node selects to use the second sensing transmitting node for performing sensing measurement.

To sum up, in the method provided in the present embodiment, by performing the handover from the first sensing transmitting node to the second sensing transmitting node in a case where the handover condition is met, the quality of the signal received by the sensing receiving node is maintained in a good state, thereby ensuring the continuity of the sensing service and achieving sensing of the sensing target in a continuously moving state.

In the method provided in the present embodiment, by performing measurement on the sensing reference signal transmitted by at least one candidate sensing transmitting node in a case where the measurement initiation condition is met, a suitable candidate sensing transmitting node is selected.

In some embodiments, steps 410, 420 and 430 may be performed simultaneously or sequentially, and the execution order of the steps may be changed, for example, step 410 is performed first, then step 420 is performed, and finally, step 430 is performed;
or step 420 is performed first, then step 430 is performed, and finally, step 410 is performed;
or step 430 is performed first, then step 410 is performed, and finally, step 420 is performed;
or step 410 is performed first, then step 430 is performed, and finally, step 420 is performed;
or step 420 is performed first, then step 410 is performed, and finally, step 430 is performed;
or step 430 is performed first, then step 420 is performed, and finally, step 410 is performed;
or steps 410 and 420 are performed simultaneously, and then step 430 is performed;
or steps 410 and 430 are performed simultaneously, and then step 420 is performed;
or steps 430 and 420 are performed simultaneously, and then step 410 is performed;
or steps 410, 420 and 430 are performed simultaneously, which are not limited in the present application thereof.

In some embodiments, steps 440 and 450 may be performed simultaneously or sequentially, and the execution order of the steps may be changed, for example, step 440 is performed first, and then step 450 is performed;
or step 450 is performed first, and then step 440 is performed;
or steps 440 and 450 are performed simultaneously; which are not limited in the present application thereof.

In some embodiments, the first configuration information is determined by a terminal;
or the first configuration information is configured by a network device;
or the first configuration information is predefined by a communication protocol;
or the first configuration information is transmitted by the second sensing transmitting node;
or the first configuration information is transmitted by any one of the candidate sensing transmitting nodes; and the transmitting entity of the first configuration information is not limited in the present application thereof.

In a case where the first configuration information is determined by the terminal or predefined by the communication protocol, step 410 is not performed.

In some embodiments, the second configuration information of all candidate sensing transmitting nodes is transmitted by one candidate sensing transmitting node;
or the second configuration information is transmitted by a sensing control network element;
or the second configuration information is determined by the terminal;
or the second configuration information is configured by the network device;
or the second configuration information is predefined by the communication protocol; and the transmitting entity of the second configuration information is not limited in the present application thereof.

In a case where the second configuration information is determined by the terminal or predefined by the communication protocol, step 420 is not performed.

In some embodiments, the third configuration information is determined by the terminal;
or the third configuration information is configured by the network device;
or the third configuration information is predefined by the communication protocol;
or the third configuration information is transmitted by the second sensing transmitting node;
or the third configuration information is transmitted by any one of the candidate sensing transmitting nodes; and the transmitting entity of the third configuration information is not limited in the present application thereof.

In a case where the third configuration information is determined by the terminal or predefined by the communication protocol, step 430 is not performed.

In some embodiments, in a case where the handover condition in step 470 does not include the measurement initiation condition, steps 410 and 460 are not performed.

In some embodiments, steps 480 and 482 may both be performed, or one of steps 480 and 482 may be selected to be performed, or neither step 480 nor step 482 may be performed, for example, step 480 may be performed first, and then step 482 may be performed;
or step 482 is performed first, and then step 480 is performed;
or steps 482 and 480 are performed simultaneously;
or step 480 is performed only;
or step 482 is performed only;
or neither step 480 nor step 482 is performed; which are not limited in the present application thereof.

In some embodiments, at least one of steps 460, 470, 480 and 482 performed by the sensing receiving node 100 may be implemented separately as an embodiment of the sensing receiving node 100.

In some embodiments, at least one of steps 410, 430 and 440 performed by the first sensing transmitting node 101 may be implemented separately as an embodiment of the first sensing transmitting node 101.

In some embodiments, at least one of steps 420 and 450 performed by the second sensing transmitting node 102 may be implemented separately as an embodiment of the second sensing transmitting node 102.

The radio electromagnetic wave signals used in cellular networks may be applied not only to wireless data transmission and communication, but also to environmental sensing. A sensing transmitting node transmits a radio electromagnetic wave signal to a sensing target, and a sensing receiving node receives and measures a radio electromagnetic wave signal reflected by the sensing target, to obtain sensing results such as a speed, a moving direction and a shape of the sensing target.

However, the sensing target, the sensing transmitting node and the sensing receiving node may all be mobile. When the sensing scenario changes, for example, after a distance between the sensing target and the sensing transmitting node increases, the quality of the radio electromagnetic wave signal received by the sensing receiving node will decrease, resulting in discontinuity of the sensing service. To this end, the present application provides a node handover method. FIG. 1 illustrates a schematic diagram of a node handover method provided by an exemplary embodiment of the present application. The method is performed by a sensing receiving node.

FIG. 1 includes a sensing receiving node 100, a first sensing transmitting node 101, a second sensing transmitting node 102 and a sensing target 103. The two sensing transmitting nodes have their own sensing areas. After the sensing target 103 leaves the sensing area, the quality of the radio electromagnetic wave signal received by the sensing receiving node 100 will decrease. The radio electromagnetic wave signal includes a sensing reference signal.

In the present embodiment, the positions of the first sensing transmitting node 101, the second sensing transmitting node 102 and the sensing receiving node 100 do not move, and the position of the sensing target 103 is moving. The sensing target 103 is within the sensing area of the first sensing transmitting node 101, and the sensing receiving node 100 receives at least one of pieces of information on: the sensing reference signal configuration information of the candidate sensing transmitting node, the handover condition of the candidate sensing transmitting node, the measurement initiation condition of the candidate sensing transmitting node or the sensing reference signal transmitted by the first sensing transmitting node 101. The above information is transmitted by the first sensing transmitting node 101 to the sensing target 103 and then reflected to the sensing receiving node 100.

The sensing receiving node 100 receives the sensing reference signal configuration information, where the sensing reference signal configuration information is used to configure the sensing receiving node 100 to perform measurement on the sensing reference signal transmitted by the second sensing transmitting node 102 in a case where the measurement initiation condition is met. The sensing reference signal configuration information is transmitted by the first sensing transmitting node 101 or the sensing control network element.

The measurement initiation condition is used to indicate that the sensing reference signal transmitted by the first sensing transmitting node 101 is inferior to a third condition.

In the present embodiment, the measurement initiation condition is represented using at least one of following pieces of information on:
the measurement result of the sensing reference signal; or
the absolute sending position or the relative sending position of the sensing reference signal;
where the relative sending position is a position relative to the sensing receiving node 100, or the relative sending position is a position relative to the sensing target 103.

The measurement initiation condition includes at least one of:
the initiation condition related to the measurement result of the sensing reference signal transmitted by the first sensing transmitting node 101;
the initiation condition related to the transmission delay corresponding to the path through which the sensing reference signal is reflected from the first sensing transmitting node 101 to the sensing receiving node 100 via the sensing target 103;
the initiation condition related to the position of the first sensing transmitting node 101;
the initiation condition related to the distance between the first sensing transmitting node 101 and the sensing receiving node 100; or
the initiation condition related to the distance between the first sensing transmitting node 101 and the sensing target 103.

The measurement initiation condition represented by the absolute sending position or the relative sending position of the sensing reference signal includes at least one of:
the initiation condition related to the transmission delay corresponding to the path through which the sensing reference signal is reflected from the first sensing transmitting node 101 to the sensing receiving node 100 via the sensing target 103;
the initiation condition related to the position of the first sensing transmitting node 101;
the initiation condition related to the distance between the first sensing transmitting node 101 and the sensing receiving node 100; or
the initiation condition related to the distance between the first sensing transmitting node 101 and the sensing target 103.

(1) The initiation condition related to the measurement result of the sensing reference signal transmitted by the first sensing transmitting node 101 includes :
   the measurement result of the sensing reference signal transmitted by the first sensing transmitting node 101 being less than a thirteenth threshold.

For example, in a case where the thirteenth threshold is -80dBm and the RSRP transmitted by the first sensing transmitting node 101 is -100dBm, the RSRP is less than the thirteenth threshold. Therefore, the initiation condition is met, and measurement is performed on the sensing reference signal transmitted by the second sensing transmitting node 102.

(2) The initiation condition related to the transmission delay corresponding to the path through which the sensing reference signal is reflected from the first sensing transmitting node 101 to the sensing receiving node 100 via the sensing target 103 includes:
the first transmission delay being greater than a fourteenth threshold;
where the first transmission delay is the transmission delay corresponding to the path through which the sensing reference signal is reflected from the first sensing transmitting node 101 to the sensing receiving node 100 via the sensing target 103.

For example, the fourteenth threshold is 60 milliseconds, and the first transmission delay is 100 milliseconds, which is greater than the fourteenth threshold. Therefore, the initiation condition is met, and measurement is performed on the sensing reference signal transmitted by the second sensing transmitting node 102.

(3) The initiation condition related to the position of the first sensing transmitting node 101 includes at least one of:
the position of the sensing target 103 leaving a first area;
the position of the sensing receiving node 100 leaving a first area; or
the position of the sensing target leaving a first area and the position of the sensing receiving node 100 leaving the first area;
where the first area corresponds to the position of the first sensing transmitting node 101.

For example, as illustrates in FIG. 1, when the position of the sensing target 103 leaves the first area corresponding to the position of the first sensing transmitting node 101, the initiation condition is met, and measurement is performed on the sensing reference signal transmitted by the second sensing transmitting node 102.

(4) The initiation condition related to the distance between the first sensing transmitting node 101 and the sensing receiving node 100 includes:
the distance between the first sensing transmitting node 101 and the sensing receiving node 100 being greater than a fifteenth threshold.

In some embodiments, the distance between the first sensing transmitting node 101 and the sensing receiving node 100 is variable. For example, the fifteenth threshold is 100 meters, and the distance between the first sensing transmitting node 101 and the sensing receiving node 100 is 200 meters, which is greater than the fifteenth threshold. Therefore, the initiation condition is met, and measurement is performed on the sensing reference signal transmitted by the second sensing transmitting node 102.

(5) The initiation condition related to the distance between the first sensing transmitting node 101 and the sensing target 103 includes:
the distance between the first sensing transmitting node 101 and the sensing target 103 being greater than a sixteenth threshold.

For example, the sixteenth threshold is 300 meters, and the distance between the first sensing transmitting node 101 and the sensing target 103 is 500 meters, which is greater than the sixteenth threshold. Therefore, the initiation condition is met, and measurement is performed on the sensing reference signal transmitted by the second sensing transmitting node 102.

The handover condition of the candidate sensing transmitting node is used for the sensing receiving node 100 to perform the handover of the sensing transmitting node. Taking the second sensing transmitting node 102 being the candidate sensing transmitting node as an example for explanation, the handover condition is used to indicate that the sensing reference signal transmitted by the first sensing transmitting node 101 is inferior to the sensing reference signal transmitted by the second sensing transmitting node 102.

In the present embodiment, the handover condition is used to indicate that the sensing reference signal transmitted by the first sensing transmitting node 101 is inferior to a first condition; or
the handover condition is used to indicate that the sensing reference signal transmitted by the second sensing transmitting node 102 is superior to a second condition; or
the handover condition is used to indicate that the sensing reference signal transmitted by the first sensing transmitting node 101 is inferior to a first condition and the sensing reference signal transmitted by the second sensing transmitting node 102 is superior to a second condition;
where the first condition is equal to or inferior to the second condition, and the first condition is inferior to the third condition.

For example, in a case where the first condition is that the RSRP is -90dBm and the RSRP transmitted by the first sensing transmitting node 101 is -100dBm, which is less than -90dBm. Therefore, the handover condition is met.

The handover condition is represented using at least one of following pieces of information on:
the measurement result of the sensing reference signal; or
the absolute sending position or the relative sending position of the sensing reference signal;
where the relative sending position is a position relative to the sensing receiving node 100, or the relative sending position is a position relative to the sensing target 103.

The handover condition includes at least one of:
the handover condition related to the measurement result of the sensing reference signal;
the handover condition related to the position;
the handover condition related to the transmission delay; or
the handover condition related to the distance.

The handover condition is transmitted by the first sensing transmitting node 101 or the sensing control function network element.

The measurement result of the sensing reference signal includes at least one of: the measurement result of the sensing reference signal transmitted by the first sensing transmitting node 101 or the measurement result of the sensing reference signal transmitted by the second sensing transmitting node 102.

The position includes at least one of: the position of the first sensing transmitting node 101, the position of the second sensing transmitting node 102, the position of the sensing receiving node 100 or the position of the sensing target 103.

The transmission delay includes at least one of: the transmission delay corresponding to the path through which the sensing reference signal is reflected from the first sensing transmitting node 101 to the sensing receiving node 100 via the sensing target 103, or the transmission delay corresponding to the path through which the sensing reference signal is reflected from the second sensing transmitting node 102 to the sensing receiving node 100 via the sensing target 103.

The distance includes at least one of: the distance between the sensing receiving node 100 and the first sensing transmitting node 101, the distance between the sensing receiving node 100 and the second sensing transmitting node 102, the distance between the sensing target 103 and the first sensing transmitting node 101, or the distance between the sensing target 103 and the second sensing transmitting node 102.

The handover condition represented by the absolute sending position or the relative sending position of the sensing reference signal includes at least one of:
the handover condition related to the position;
the handover condition related to the transmission delay;
the handover condition related to the distance.

(1) The handover condition related to the measurement result of the sensing reference signal includes at least one of:
   the measurement result of the sensing reference signal transmitted by the first sensing transmitting node 101 being less than a first threshold;
   the measurement result of the sensing reference signal transmitted by the second sensing transmitting node 102 being greater than a second threshold;
   the measurement result of the sensing reference signal transmitted by the first sensing transmitting node 101 being less than a first threshold, and the measurement result of the sensing reference signal transmitted by the second sensing transmitting node 102 being greater than a second threshold; or
   the difference between the measurement result of the sensing reference signal transmitted by the second sensing transmitting node 102 and the measurement result of the sensing reference signal transmitted by the first sensing transmitting node 101 being greater than a third threshold.

For example, in a case where the first threshold is -80dBm and the RSRP transmitted by the first sensing transmitting node 101 is -100dBm, the RSRP is less than the first threshold. Therefore, the handover condition is met, and the handover from the first sensing transmitting node 101 to the second sensing transmitting node 102 is performed.

(2) The handover condition related to the position includes at least one of:
the position of the sensing target 103 moving from a first area to a second area;
the position of the sensing receiving node 100 moving from a first area to a second area; or
the position of the sensing target 103 moving from a first area to a second area, and the position of the sensing receiving node 100 moving from the first area to the second area;
where the first area corresponds to the position of the first sensing transmitting node 101, and the second area corresponds to the position of the second sensing transmitting node 102.

For example, as illustrates in FIG. 1, in a case where the position of the sensing target 103 moves from the first area corresponding to the position of the first sensing transmitting node 101 to the second area corresponding to the position of the second sensing transmitting node 102, the handover condition is met, and the handover from the first sensing transmitting node 101 to the second sensing transmitting node 102 is performed.

(3) The handover condition related to the transmission delay include at least one of:
the first transmission delay being greater than a fourth threshold;
the second transmission delay being less than a fifth threshold;
the first transmission delay being greater than a fourth threshold, and the second transmission delay being less than a fifth threshold; or
the difference between the first transmission delay and the second transmission delay being greater than a sixth threshold;
where the first transmission delay is the transmission delay corresponding to the path through which the sensing reference signal is reflected from the first sensing transmitting node to the sensing receiving node via the sensing target, and the second transmission delay is the transmission delay corresponding to the path through which the sensing reference signal is reflected from the second sensing transmitting node to the sensing receiving node via the sensing target.

For example, the sixth threshold is 0, the first transmission delay is 100 milliseconds, the second transmission delay is 50 milliseconds, and the difference between the first transmission delay and the second transmission delay is 50 milliseconds, which is greater than 0. Therefore, the handover condition is met, and the handover from the first sensing transmitting node 101 to the second sensing transmitting node 102 is performed.

(4) The handover condition related to the distance includes at least one of:
the distance between the sensing receiving node 100 and the first sensing transmitting node 101 being greater than a seventh threshold;
the distance between the sensing receiving node 100 and the second sensing transmitting node 102 being less than an eighth threshold;
the distance between the sensing receiving node 100 and the first sensing transmitting node 101 being greater than a seventh threshold, and the distance between the sensing receiving node 100 and the second sensing transmitting node 102 being less than an eighth threshold;
the difference between the distance between the sensing receiving node 100 and the first sensing transmitting node 101 and the distance between the sensing receiving node 100 and the second sensing transmitting node 102 being greater than a ninth threshold;
the distance between the sensing target 103 and the first sensing transmitting node 101 being greater than a tenth threshold;
the distance between the sensing target 103 and the second sensing transmitting node 102 being less than an eleventh threshold;
the distance between the sensing target 103 and the first sensing transmitting node 101 being greater than a tenth threshold, and the distance between the sensing target 103 and the second sensing transmitting node 102 being less than an eleventh threshold; or
the difference between the distance between the sensing target 103 and the first sensing transmitting node 101 and the distance between the sensing target 103 and the second sensing transmitting node 102 being greater than a twelfth threshold.

For example, the ninth threshold is 0, the distance between the sensing receiving node 100 and the first sensing transmitting node 101 is 100 meters, the distance between the sensing receiving node 100 and the second sensing transmitting node 102 is 50 meters, and the difference between the 100 meters and 50 meters is 50 meters, which is greater than 0. Therefore, the handover condition is met, and the handover from the first sensing transmitting node 101 to the second sensing transmitting node 102 is performed.

In some embodiments, in a case where there are multiple candidate sensing transmitting nodes, the sensing receiving node 100 selects the second sensing transmitting node 102 from the multiple candidate sensing transmitting nodes that meet the handover condition based on the selection condition, and the selection condition includes at least one of:
the candidate sensing transmitting node with the largest measurement result of the sensing reference signal;
the candidate sensing transmitting node with the smallest transmission delay corresponding to the path through which the sensing reference signal is reflected from the candidate sensing transmitting node to the sensing receiving node 100 via the sensing target 103;
the candidate sensing transmitting node with the shortest distance to the sensing receiving node 100;
the candidate sensing transmitting node with the shortest distance to the sensing target 103; or
any one of the candidate sensing transmitting nodes.

For example, the candidate sensing transmitting nodes include the second sensing transmitting node 102 and a third sensing transmitting node. For the transmission delay corresponding to the path through which the sensing reference signal is reflected from the candidate sensing transmitting node to the sensing receiving node 100 via the sensing target 103, the transmission delay corresponding to the second sensing transmitting node 102 is 30 milliseconds, and the transmission delay corresponding to the third sensing transmitting node is 60 milliseconds. The transmission delay corresponding to the second sensing transmitting node 102 is the smallest, and the second sensing transmitting node 102 is selected.

In a case where the handover condition information is met, the sensing receiving node 100 stops the measurement of the first sensing transmitting node 101.

Optionally, the sensing receiving node 100 transmits the first notification to the first sensing transmitting node 101, where the first notification is used to notify the first sensing transmitting node 101 to stop transmitting the sensing reference signal, thereby stopping the measurement of the first sensing transmitting node 101.

Optionally, the sensing receiving node 100 transmits the second notification to the second sensing transmitting node 102, where the second notification is used to notify the second sensing transmitting node 102 that the sensing receiving node 100 selects to use the second sensing transmitting node 102 for performing sensing measurement, thereby stopping the measurement of the first sensing transmitting node 101.

The above methods are aimed at the situations in which the information such as the speed, the moving direction and the position of the sensing target 103 needs to be obtained. In some embodiments, it is necessary to obtain the environmental information such as the road state and greening construction. As illustrated in FIG. 2, the sensing target carries a sensing receiving node 100, and the whole serves as a sensing receiving node 100 for sensing and receiving. FIG. 2 illustrates a schematic diagram of a node handover method provided by the exemplary embodiment of the present application, where the method is performed by the sensing receiving node 100.

FIG. 2 includes a sensing receiving node 100, a first sensing transmitting node 101 and a second sensing transmitting node 102, where the positions of the first sensing transmitting node 101 and the second sensing transmitting node 102 do not move, and the position of the sensing receiving node 100 is moving.

In a case where the sensing target carries the sensing receiving node, the distance between the sensing target and the sensing receiving node is 0, that is, in the above node handover methods, the thing represented by the sensing target is the same as the thing represented by the sensing receiving node. Since the principle of the node handover methods in the scenarios where the sensing target carries the sensing receiving node is the same as that of the node handover methods in the scenarios where the sensing target and the sensing receiving node are separated, the description will not be repeated here.

To sum up, in the method provided in the present embodiment, by performing the handover from the first sensing transmitting node to the second sensing transmitting node in a case where the handover condition is met, the quality of the signal received by the sensing receiving node is maintained in a good state, thereby ensuring the continuity of the sensing service and achieving sensing of the sensing target in a continuously moving state.

In the method provided in the present embodiment, by performing measurement on the sensing reference signal transmitted by at least one candidate sensing transmitting node in a case where the measurement initiation condition is met, a suitable candidate sensing transmitting node is selected.

FIG. 5 illustrates a block diagram of a sensing receiving apparatus provided by an exemplary embodiment of the present application, and the apparatus includes:
a switching module 510, configured to perform a handover from a first sensing transmitting apparatus to a second sensing transmitting apparatus in a case where a handover condition is met.

In a possible design of the present embodiment, the handover condition is used to indicate that a sensing reference signal transmitted by the first sensing transmitting node is inferior to a sensing reference signal transmitted by the second sensing transmitting node.

In a possible design of the present embodiment, the handover condition is used to indicate that a sensing reference signal transmitted by the first sensing transmitting node is inferior to a first condition; or
the handover condition is used to indicate that a sensing reference signal transmitted by the second sensing transmitting node is superior to a second condition; or
the handover condition is used to indicate that a sensing reference signal transmitted by the first sensing transmitting node is inferior to a first condition and a sensing reference signal transmitted by the second sensing transmitting node is superior to a second condition;
where the first condition is equal to or inferior to the second condition.

In a possible design of the present embodiment, the handover condition is represented using at least one of following pieces of information on:
a measurement result of a sensing reference signal; or
an absolute sending position or a relative sending position of a sensing reference signal;
where the relative sending position is a position relative to the sensing receiving node, or the relative sending position is a position relative to a sensing target.

In a possible design of the present embodiment, the handover condition includes at least one of:
a handover condition related to a measurement result of a sensing reference signal;
a handover condition related to a position;
a handover condition related to a transmission delay; or
a handover condition related to a distance;
where the measurement result of the sensing reference signal includes at least one of: a measurement result of a sensing reference signal transmitted by the first sensing transmitting apparatus or a measurement result of a sensing reference signal transmitted by the second sensing transmitting apparatus; the position includes at least one of: a position of the first sensing transmitting apparatus, a position of the second sensing transmitting apparatus, a position of the sensing receiving apparatus or a position of a sensing target; the transmission delay includes at least one of: a transmission delay corresponding to a path through which a sensing reference signal is reflected from the first sensing transmitting apparatus to the sensing receiving apparatus via the sensing target, or a transmission delay corresponding to a path through which a sensing reference signal is reflected from the second sensing transmitting apparatus to the sensing receiving apparatus via the sensing target; and the distance includes at least one of: a distance between the sensing receiving apparatus and the first sensing transmitting apparatus, a distance between the sensing receiving apparatus and the second sensing transmitting apparatus, a distance between the sensing target and the first sensing transmitting apparatus, or a distance between the sensing target and the second sensing transmitting apparatus.

In a possible design of the present embodiment, the handover condition related to the measurement result of the sensing reference signal includes at least one of:
the measurement result of the sensing reference signal transmitted by the first sensing transmitting apparatus being less than a first threshold;
the measurement result of the sensing reference signal transmitted by the second sensing transmitting apparatus being greater than a second threshold;
the measurement result of the sensing reference signal transmitted by the first sensing transmitting apparatus being less than a first threshold, and the measurement result of the sensing reference signal transmitted by the second sensing transmitting apparatus being greater than a second threshold; or
a difference between the measurement result of the sensing reference signal transmitted by the second sensing transmitting apparatus and the measurement result of the sensing reference signal transmitted by the first sensing transmitting apparatus being greater than a third threshold.

In a possible design of the present embodiment, the measurement result of the sensing reference signal includes at least one of:
an average measurement result corresponding to the sensing reference signal on one path component;
an average measurement result corresponding to the sensing reference signal on a plurality of path components; or
an average measurement result corresponding to the sensing reference signal on all path components.

In a possible design of the present embodiment, the handover condition related to the position includes at least one of:
the position of the sensing target moving from a first area to a second area;
the position of the sensing receiving apparatus moving from a first area to a second area; or
the position of the sensing target moving from a first area to a second area, and the position of the sensing receiving apparatus moving from the first area to the second area;
where the first area corresponds to the position of the first sensing transmitting apparatus, and the second area corresponds to the position of the second sensing transmitting apparatus.

In a possible design of the present embodiment, the handover condition related to the transmission delay includes at least one of:
a first transmission delay being greater than a fourth threshold;
a second transmission delay being less than a fifth threshold;
a first transmission delay being greater than a fourth threshold, and a second transmission delay being less than a fifth threshold; or
a difference between a first transmission delay and a second transmission delay being greater than a sixth threshold;
where the first transmission delay is the transmission delay corresponding to the path through which the sensing reference signal is reflected from the first sensing transmitting apparatus to the sensing receiving apparatus via the sensing target, and the second transmission delay is the transmission delay corresponding to the path through which the sensing reference signal is reflected from the second sensing transmitting apparatus to the sensing receiving apparatus via the sensing target.

In a possible design of the present embodiment, the handover condition related to the distance includes at least one of:
the distance between the sensing receiving apparatus and the first sensing transmitting apparatus being greater than a seventh threshold;
the distance between the sensing receiving apparatus and the second sensing transmitting apparatus being less than an eighth threshold;
the distance between the sensing receiving apparatus and the first sensing transmitting apparatus being greater than a seventh threshold, and the distance between the sensing receiving apparatus and the second sensing transmitting apparatus being less than an eighth threshold;
a difference between the distance between the sensing receiving apparatus and the first sensing transmitting apparatus and the distance between the sensing receiving apparatus and the second sensing transmitting apparatus being greater than a ninth threshold;
the distance between the sensing target and the first sensing transmitting apparatus being greater than a tenth threshold;
the distance between the sensing target and the second sensing transmitting apparatus being less than an eleventh threshold;
the distance between the sensing target and the first sensing transmitting apparatus being greater than a tenth threshold, and the distance between the sensing target and the second sensing transmitting apparatus being less than an eleventh threshold; or
a difference between the distance between the sensing target and the first sensing transmitting apparatus and the distance between the sensing target and the second sensing transmitting apparatus being greater than a twelfth threshold.

In a possible design of the present embodiment, the apparatus further includes: a measurement module 520, configured to perform measurement on a sensing reference signal transmitted by at least one candidate sensing transmitting apparatus; where the second sensing transmitting apparatus is one of the at least one candidate sensing transmitting node apparatus.

In a possible design of the present embodiment, the apparatus further includes: a transmitting module 530, configured to transmit a first notification to the first sensing transmitting apparatus, where the first notification is used to notify the first sensing transmitting apparatus to stop transmitting the sensing reference signal.

In a possible design of the present embodiment, the transmitting module 530 is further configured to transmit a second notification to the second sensing transmitting apparatus, where the second notification is used to notify the second sensing transmitting apparatus that the sensing receiving apparatus selects to use the second sensing transmitting apparatus for performing sensing measurement.

In a possible design of the present embodiment, the second sensing transmitting apparatus is selected from at least two candidate sensing transmitting apparatus that meet the handover condition based on a selection condition, and the selection condition includes at least one of:
a candidate sensing transmitting apparatus with a largest measurement result of a sensing reference signal;
a candidate sensing transmitting apparatus with a smallest transmission delay corresponding to a path through which a sensing reference signal is reflected from the candidate sensing transmitting apparatus to the sensing receiving apparatus via a sensing target;
a candidate sensing transmitting apparatus with a shortest distance to the sensing receiving apparatus;
a candidate sensing transmitting apparatus with a shortest distance to a sensing target;
any one of candidate sensing transmitting apparatus.

In a possible design of the present embodiment, the apparatus further includes: a receiving module 540, configured to receive first configuration information, where the first configuration information is used to configure the sensing receiving apparatus to perform measurement on the sensing reference signal transmitted by the at least one candidate sensing transmitting apparatus in a case where a measurement initiation condition is met.

In a possible design of the present embodiment, the measurement initiation condition is used to indicate that a sensing reference signal transmitted by the first sensing transmitting node is inferior to a third condition.

In a possible design of the present embodiment, the measurement initiation condition is represented using at least one of following pieces of information on:
a measurement result of the sensing reference signal; or
an absolute sending position or a relative sending position of the sensing reference signal;
where the relative sending position is a position relative to the sensing receiving node, or the relative sending position is a position relative to the sensing target.

In a possible design of the present embodiment, the measurement initiation condition includes at least one of:
an initiation condition related to a measurement result of a sensing reference signal transmitted by the first sensing transmitting apparatus;
an initiation condition related to a transmission delay corresponding to a path through which a sensing reference signal is reflected from the first sensing transmitting apparatus to the sensing receiving apparatus via a sensing target;
an initiation condition related to a position of the first sensing transmitting apparatus;
an initiation condition related to a distance between the first sensing transmitting apparatus and the sensing receiving apparatus; or
an initiation condition related to a distance between the first sensing transmitting apparatus and a sensing target.

In a possible design of the present embodiment, the initiation condition related to the measurement result of the sensing reference signal transmitted by the first sensing transmitting apparatus includes: the measurement result of the sensing reference signal transmitted by the first sensing transmitting apparatus being less than a thirteenth threshold.

In a possible design of the present embodiment, the initiation condition related to the transmission delay corresponding to the path through which the sensing reference signal is reflected from the first sensing transmitting apparatus to the sensing receiving apparatus via a sensing target includes: a first transmission delay being greater than a fourteenth threshold;
where the first transmission delay is the transmission delay corresponding to the path through which the sensing reference signal is reflected from the first sensing transmitting apparatus to the sensing receiving apparatus via a sensing target.

In a possible design of the present embodiment, the initiation condition related to the position of the first sensing transmitting apparatus includes at least one of:
a position of the sensing target leaving a first area;
a position of the sensing receiving apparatus leaving a first area; or
a position of the sensing target leaving a first area, and a position of the sensing receiving apparatus leaving the first area;
where the first area corresponds to the position of the first sensing transmitting apparatus.

In a possible design of the present embodiment, the initiation condition related to the distance between the first sensing transmitting apparatus and the sensing receiving apparatus includes: the distance between the first sensing transmitting apparatus and the sensing receiving apparatus being greater than a fifteenth threshold.

In a possible design of the present embodiment, the initiation condition related to the distance between the first sensing transmitting apparatus and the sensing target includes: the distance between the first sensing transmitting apparatus and the sensing target being greater than a sixteenth threshold.

In a possible design of the present embodiment, the receiving module 540 is further configured to receive second configuration information, where the second configuration information is used to indicate a transmission configuration of a sensing reference signal transmitted by the candidate sensing transmitting apparatus.

In a possible design of the present embodiment, the receiving module 540 is further configured to receive third configuration information, and the third configuration information is used to configure the handover condition.

FIG. 6 illustrates a block diagram of a first sensing transmitting apparatus provided by an exemplary embodiment of the present application, and the apparatus includes:
a first transmitting module 610, configured to transmit third configuration information, where the third configuration information is used to configure a sensing receiving apparatus to perform a handover from the first sensing transmitting apparatus to a second sensing transmitting apparatus in a case where a handover condition is met.

In a possible design of the embodiment, the first transmitting module 610 is further configured to transmit first configuration information, where the first configuration information is used to configure the sensing receiving apparatus to perform measurement on the sensing reference signal transmitted by at least one candidate sensing transmitting apparatus in a case where a measurement initiation condition is met.

In a possible design of the embodiment, the measurement initiation condition is used to indicate that a sensing reference signal transmitted by the first sensing transmitting node is inferior to a third condition.

In a possible design of the embodiment, the measurement initiation condition is represented using at least one of following pieces of information on:
a measurement result of the sensing reference signal;
an absolute sending position or a relative sending position of the sensing reference signal;
where the relative sending position is a position relative to the sensing receiving node, or the relative sending position is a position relative to a sensing target.

In a possible design of the embodiment, the measurement initiation condition includes at least one of:
an initiation condition related to a measurement result of a sensing reference signal transmitted by the first sensing transmitting apparatus;
an initiation condition related to a transmission delay corresponding to a path through which a sensing reference signal is reflected from the first sensing transmitting apparatus to the sensing receiving apparatus via a sensing target;
an initiation condition related to a position of the first sensing transmitting apparatus;
an initiation condition related to a distance between the first sensing transmitting apparatus and the sensing receiving apparatus; or
an initiation condition related to a distance between the first sensing transmitting apparatus and a sensing target.

In a possible design of the embodiment, the initiation condition related to the measurement result of the sensing reference signal transmitted by the first sensing transmitting apparatus includes: the measurement result of the sensing reference signal transmitted by the first sensing transmitting apparatus being less than a thirteenth threshold.

In a possible design of the embodiment, the initiation condition related to the transmission delay corresponding to the path through which the sensing reference signal is reflected from the first sensing transmitting apparatus to the sensing receiving apparatus via the sensing target includes: a first transmission delay being greater than a fourteenth threshold;
where the first transmission delay is the transmission delay corresponding to the path through which the sensing reference signal is reflected from the first sensing transmitting apparatus to the sensing receiving apparatus via the sensing target.

In a possible design of the embodiment, the initiation condition related to the position of the first sensing transmitting apparatus includes at least one of:
a position of the sensing target leaving a first area;
a position of the sensing receiving apparatus leaving a first area; or
a position of the sensing target leaving a first area, and a position of the sensing receiving apparatus leaving the first area;
where the first area corresponds to the position of the first sensing transmitting apparatus.

In a possible design of the embodiment, the initiation condition related to the distance between the first sensing transmitting apparatus and the sensing receiving apparatus includes: the distance between the first sensing transmitting apparatus and the sensing receiving apparatus being greater than a fifteenth threshold.

In a possible design of the embodiment, the initiation condition related to the distance between the first sensing transmitting apparatus and the sensing target includes: the distance between the first sensing transmitting apparatus and the sensing target being greater than a sixteenth threshold.

In a possible design of the embodiment, the apparatus further includes: a first receiving module 820, configured to receive a first notification transmitted by the sensing receiving apparatus, where the first notification is used to notify the first sensing transmitting apparatus to stop transmitting a sensing reference signal.

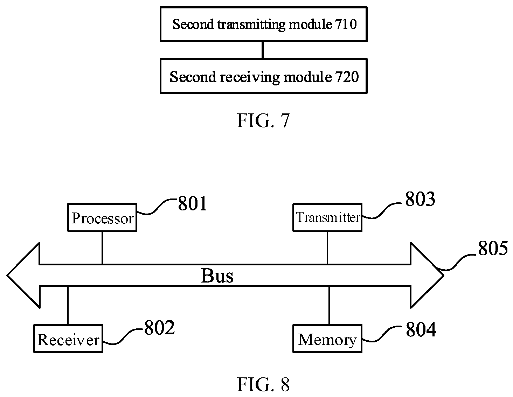

FIG. 7 illustrates a block diagram of a candidate sensing transmitting apparatus provided by an exemplary embodiment of the present application, and the apparatus includes:
a second transmitting module 710, configured to transmit second configuration information, where the second configuration information is used to indicate a transmission configuration of a sensing reference signal transmitted by the candidate sensing transmitting apparatus;
where the transmission configuration is used for a sensing receiving apparatus to perform measurement on the sensing reference signal; and in a case where a measurement result of the sensing reference signal meets a handover condition, a handover from a first sensing transmitting apparatus to a second sensing transmitting apparatus is performed, the second sensing transmitting apparatus is one of candidate sensing transmitting apparatuses.

In a possible design of the embodiment, the apparatus also includes: a second receiving module 720, configured to receive a second notification transmitted by the sensing receiving apparatus; where the second notification is used to notify the second sensing transmitting apparatus that the sensing receiving apparatus selects to use the second sensing transmitting apparatus for performing sensing measurement.

FIG. 8 illustrates a structural schematic diagram of a sensing receiving node or a sensing transmitting node provided by an exemplary embodiment of the present application, which includes: a processor 801, a receiver 802, a transmitter 803, a memory 804 and a bus 805.

The processor 801 includes one or more processing cores. The processor 801 performs various functional applications and information processing by running software programs and modules.

The receiver 802 and the transmitter 803 may be implemented as a communication component, which may be a communication chip, and the communication component may be called a transceiver.

The memory 804 is connected to the processor 801 via the bus 805.

The memory 804 may be used to store at least one instruction, and the processor 801 may be used to execute the at least one instruction to implement various steps in the above method embodiments.

In addition, the memory 804 may be implemented by any type of volatile or non-volatile storage device or a combination thereof. The volatile or non-volatile storage device includes, but is not limited to: a magnetic disk or an optical disk, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

In a possible implementation, a processor in the sensing receiving node is configured to perform a handover from a first sensing transmitting node to a second sensing transmitting node in a case where a handover condition is met;
the processor in the sensing receiving node is configured to perform measurement on a sensing reference signal transmitted by at least one candidate sensing transmitting node, where the second sensing transmitting node is one of the at least one candidate sensing transmitting node;
a transceiver in the sensing receiving node is configured to receive first configuration information, where the first configuration information is used to configure the sensing receiving node to perform measurement on the sensing reference signal transmitted by the at least one candidate sensing transmitting node in a case where a measurement initiation condition is met;
the transceiver in the sensing receiving node is configured to receive second configuration information, where the second configuration information is used to indicate a transmission configuration of the sensing reference signal transmitted by the candidate sensing transmitting node; and
the transceiver in the sensing receiving node is configured to receive third configuration information, where the third configuration information is used to configure the handover condition.

In a possible implementation, a transceiver in the sensing transmitting node is configured to transmit third configuration information, where the third configuration information is used to configure a sensing receiving node to perform a handover from a first sensing transmitting node to a second sensing transmitting node in a case where a handover condition is met;
the transceiver in the sensing transmitting node is configured to receive a first notification transmitted by the sensing receiving node, where the first notification is used to notify the first sensing transmitting node to stop transmitting the sensing reference signal;
the transceiver in the sensing transmitting node is configured to transmit second configuration information, where the second configuration information is used to indicate a transmission configuration of a sensing reference signal transmitted by the candidate sensing transmitting node; where the transmission configuration is used for a sensing receiving node to perform measurement on the sensing reference signal; and in a case where a measurement result of the sensing reference signal meets a handover condition, a handover from a first sensing transmitting node to a second sensing transmitting node is performed, the second sensing transmitting node being one of candidate sensing transmitting nodes; and
the transceiver in the sensing transmitting node is configured to receive a second notification transmitted by the sensing receiving node; where the second notification is used to notify the second sensing transmitting node that the sensing receiving node selects to use the second sensing transmitting node for performing sensing measurement.

In an exemplary embodiment, a computer-readable storage medium is also provided. The computer-readable storage medium has at least one instruction, at least one program, a code set or instruction set stored therein, and the at least one instruction, the at least one program, the code set or instruction set is loaded and executed by a processor to implement the node handover methods provided by the above-mentioned method embodiments.

In an exemplary embodiment, a computer program product is further provided. When the computer program product is executed on a processor of a computer device, the computer device is enabled to perform the node handover methods according to the above aspect.

Those ordinary skilled in the art may understand that all or part of the steps to implement the above embodiments may be accomplished by hardware or by instructing related hardware through a program, and the program may be stored in a computer-readable storage medium, and the above-mentioned storage medium may be a read-only memory, a disk or an optical disk, or the like.

The foregoing is merely optional embodiments of the present application, and are not intended to limit the present application. Any modification, equivalent replacement, improvement, or the like made within the spirit and principles of the present application shall be included within the protection scope of the present application.

## Claims

1. A node handover method, performed by a sensing receiving node and comprising:
performing a handover from a first sensing transmitting node to a second sensing transmitting node in a case where a handover condition is met.

2. The method according to claim 1, wherein the handover condition is used to indicate that a sensing reference signal transmitted by the first sensing transmitting node is inferior to a sensing reference signal transmitted by the second sensing transmitting node.

3. The method according to claim 1, wherein the handover condition is used to indicate that a sensing reference signal transmitted by the first sensing transmitting node is inferior to a first condition; or
the handover condition is used to indicate that a sensing reference signal transmitted by the second sensing transmitting node is superior to a second condition; or
the handover condition is used to indicate that a sensing reference signal transmitted by the first sensing transmitting node is inferior to a first condition and a sensing reference signal transmitted by the second sensing transmitting node is superior to a second condition;
wherein the first condition is equal to or inferior to the second condition.

4. The method according to claim 1, wherein the handover condition is represented using at least one of following pieces of information on:
a measurement result of a sensing reference signal; or
an absolute sending position or a relative sending position of a sensing reference signal;
wherein the relative sending position is a position relative to the sensing receiving node, or the relative sending position is a position relative to a sensing target.

5. The method according to any one of claims 1 to 4, wherein the handover condition comprises at least one of:
a handover condition related to a measurement result of a sensing reference signal;
a handover condition related to a position;
a handover condition related to a transmission delay; or
a handover condition related to a distance;
wherein the measurement result of the sensing reference signal comprises at least one of: a measurement result of a sensing reference signal transmitted by the first sensing transmitting node or a measurement result of a sensing reference signal transmitted by the second sensing transmitting node; the position comprises at least one of: a position of the first sensing transmitting node, a position of the second sensing transmitting node, a position of the sensing receiving node or a position of a sensing target; the transmission delay comprises at least one of: a transmission delay corresponding to a path through which a sensing reference signal is reflected from the first sensing transmitting node to the sensing receiving node via the sensing target, or a transmission delay corresponding to a path through which a sensing reference signal is reflected from the second sensing transmitting node to the sensing receiving node via the sensing target; and the distance comprises at least one of: a distance between the sensing receiving node and the first sensing transmitting node, a distance between the sensing receiving node and the second sensing transmitting node, a distance between the sensing target and the first sensing transmitting node, or a distance between the sensing target and the second sensing transmitting node.

6. The method according to claim 5, wherein the handover condition related to the measurement result of the sensing reference signal comprises at least one of:
the measurement result of the sensing reference signal transmitted by the first sensing transmitting node being less than a first threshold;
the measurement result of the sensing reference signal transmitted by the second sensing transmitting node being greater than a second threshold;
the measurement result of the sensing reference signal transmitted by the first sensing transmitting node being less than a first threshold, and the measurement result of the sensing reference signal transmitted by the second sensing transmitting node being greater than a second threshold; or
a difference between the measurement result of the sensing reference signal transmitted by the second sensing transmitting node and the measurement result of the sensing reference signal transmitted by the first sensing transmitting node being greater than a third threshold.

7. The method according to claim 6, wherein the measurement result of the sensing reference signal comprises at least one of:
an average measurement result corresponding to the sensing reference signal on one path component;
an average measurement result corresponding to the sensing reference signal on a plurality of path components; or
an average measurement result corresponding to the sensing reference signal on all path components.

8. The method according to claim 5, wherein the handover condition related to the position comprises at least one of:
the position of the sensing target moving from a first area to a second area;
the position of the sensing receiving node moving from a first area to a second area; or
the position of the sensing target moving from a first area to a second area, and the position of the sensing receiving node moving from the first area to the second area;
wherein the first area corresponds to the position of the first sensing transmitting node, and the second area corresponds to the position of the second sensing transmitting node.

9. The method according to claim 5, wherein the handover condition related to the transmission delay comprises at least one of:
a first transmission delay being greater than a fourth threshold;
a second transmission delay being less than a fifth threshold;
a first transmission delay being greater than a fourth threshold, and a second transmission delay being less than a fifth threshold; or
a difference between a first transmission delay and a second transmission delay being greater than a sixth threshold;
wherein the first transmission delay is the transmission delay corresponding to the path through which the sensing reference signal is reflected from the first sensing transmitting node to the sensing receiving node via the sensing target, and the second transmission delay is the transmission delay corresponding to the path through which the sensing reference signal is reflected from the second sensing transmitting node to the sensing receiving node via the sensing target.

10. The method according to claim 5, wherein the handover condition related to the distance comprises at least one of:
the distance between the sensing receiving node and the first sensing transmitting node being greater than a seventh threshold;
the distance between the sensing receiving node and the second sensing transmitting node being less than an eighth threshold;
the distance between the sensing receiving node and the first sensing transmitting node being greater than a seventh threshold, and the distance between the sensing receiving node and the second sensing transmitting node being less than an eighth threshold;
a difference between the distance between the sensing receiving node and the first sensing transmitting node and the distance between the sensing receiving node and the second sensing transmitting node being greater than a ninth threshold;
the distance between the sensing target and the first sensing transmitting node being greater than a tenth threshold;
the distance between the sensing target and the second sensing transmitting node being less than an eleventh threshold;
the distance between the sensing target and the first sensing transmitting node being greater than a tenth threshold, and the distance between the sensing target and the second sensing transmitting node being less than an eleventh threshold; or
a difference between the distance between the sensing target and the first sensing transmitting node and the distance between the sensing target and the second sensing transmitting node being greater than a twelfth threshold.

11. The method according to any one of claims 1 to 10, further comprising:
performing measurement on a sensing reference signal transmitted by at least one candidate sensing transmitting node;
wherein the second sensing transmitting node is one of the at least one candidate sensing transmitting node.

12. The method according to claim 11, further comprising:
receiving first configuration information, wherein the first configuration information is used to configure the sensing receiving node to perform measurement on the sensing reference signal transmitted by the at least one candidate sensing transmitting node in a case where a measurement initiation condition is met.

13. The method according to claim 12, wherein the measurement initiation condition is used to indicate that a sensing reference signal transmitted by the first sensing transmitting node is inferior to a third condition.

14. The method according to claim 12, wherein the measurement initiation condition is represented using at least one of following pieces of information on:
a measurement result of the sensing reference signal; or
an absolute sending position or a relative sending position of the sensing reference signal;
wherein the relative sending position is a position relative to the sensing receiving node, or the relative sending position is a position relative to a sensing target.

15. The method according to any one of claims 12 to 14, wherein the measurement initiation condition comprises at least one of:
an initiation condition related to a measurement result of a sensing reference signal transmitted by the first sensing transmitting node;
an initiation condition related to a transmission delay corresponding to a path through which a sensing reference signal is reflected from the first sensing transmitting node to the sensing receiving node via a sensing target;
an initiation condition related to a position of the first sensing transmitting node;
an initiation condition related to a distance between the first sensing transmitting node and the sensing receiving node; or
an initiation condition related to a distance between the first sensing transmitting node and a sensing target.

16. The method according to claim 15, wherein the initiation condition related to the measurement result of the sensing reference signal transmitted by the first sensing transmitting node comprises:
the measurement result of the sensing reference signal transmitted by the first sensing transmitting node being less than a thirteenth threshold.

17. The method according to claim 15, wherein the initiation condition related to the transmission delay corresponding to the path through which the sensing reference signal is reflected from the first sensing transmitting node to the sensing receiving node via the sensing target comprises:
a first transmission delay being greater than a fourteenth threshold;
wherein the first transmission delay is the transmission delay corresponding to the path through which the sensing reference signal is reflected from the first sensing transmitting node to the sensing receiving node via the sensing target.

18. The method according to claim 15, wherein the initiation condition related to the position of the first sensing transmitting node comprises at least one of:
a position of the sensing target leaving a first area;
a position of the sensing receiving node leaving a first area; or
a position of the sensing target leaving a first area and a position of the sensing receiving node leaving the first area;
wherein the first area corresponds to the position of the first sensing transmitting node.

19. The method according to claim 15, wherein the initiation condition related to the distance between the first sensing transmitting node and the sensing receiving node comprises:
the distance between the first sensing transmitting node and the sensing receiving node being greater than a fifteenth threshold.

20. The method according to claim 15, wherein the initiation condition related to the distance between the first sensing transmitting node and the sensing target comprises:
the distance between the first sensing transmitting node and the sensing target being greater than a sixteenth threshold.

21. The method according to claim 11, further comprising:
receiving second configuration information, wherein the second configuration information is used to indicate a transmission configuration of the sensing reference signal transmitted by the candidate sensing transmitting node.

22. The method according to any one of claims 1 to 21, further comprising:
receiving third configuration information, wherein the third configuration information is used to configure the handover condition.

23. The method according to any one of claims 1 to 22, further comprising:
transmitting a first notification to the first sensing transmitting node, wherein the first notification is used to notify the first sensing transmitting node to stop transmitting a sensing reference signal.

24. The method according to any one of claims 1 to 22, further comprising:
transmitting a second notification to the second sensing transmitting node, wherein the second notification is used to notify the second sensing transmitting node that the sensing receiving node selects to use the second sensing transmitting node for performing sensing measurement.

25. The method according to claim 11, wherein the second sensing transmitting node is selected from at least two candidate sensing transmitting nodes that meet the handover condition based on a selection condition.

26. The method according to claim 25, wherein the selection condition comprises at least one of:
a candidate sensing transmitting node with a largest measurement result of a sensing reference signal;
a candidate sensing transmitting node with a smallest transmission delay corresponding to a path through which a sensing reference signal is reflected from the candidate sensing transmitting node to the sensing receiving node via a sensing target;
a candidate sensing transmitting node with a shortest distance to the sensing receiving node;
a candidate sensing transmitting node with a shortest distance to a sensing target; or
any one of candidate sensing transmitting nodes.

27. A node handover method, performed by a first sensing transmitting node and comprising:
transmitting third configuration information, wherein the third configuration information is used to configure a sensing receiving node to perform a handover from the first sensing transmitting node to a second sensing transmitting node in a case where a handover condition is met.

28. The method according to claim 27, further comprising:
transmitting first configuration information, wherein the first configuration information is used to configure the sensing receiving node to perform measurement on a sensing reference signal transmitted by at least one candidate sensing transmitting node in a case where a measurement initiation condition is met.

29. The method according to claim 28, wherein the measurement initiation condition is used to indicate that a sensing reference signal transmitted by the first sensing transmitting node is inferior to a third condition.

30. The method according to claim 28, wherein the measurement initiation condition is represented using at least one of following pieces of information on:
a measurement result of the sensing reference signal; or
an absolute sending position or a relative sending position of the sensing reference signal;
wherein the relative sending position is a position relative to the sensing receiving node, or the relative sending position is a position relative to a sensing target.

31. The method according to any one of claims 28 to 30, wherein the measurement initiation condition comprises at least one of:
an initiation condition related to a measurement result of a sensing reference signal transmitted by the first sensing transmitting node;
an initiation condition related to a transmission delay corresponding to a path through which a sensing reference signal is reflected from the first sensing transmitting node to the sensing receiving node via a sensing target;
an initiation condition related to a position of the first sensing transmitting node;
an initiation condition related to a distance between the first sensing transmitting node and the sensing receiving node; or
an initiation condition related to a distance between the first sensing transmitting node and a sensing target.

32. The method according to claim 31, wherein the initiation condition related to the measurement result of the sensing reference signal transmitted by the first sensing transmitting node comprises:
the measurement result of the sensing reference signal transmitted by the first sensing transmitting node being less than a thirteenth threshold.

33. The method according to claim 31, wherein the initiation condition related to the transmission delay corresponding to the path through which the sensing reference signal is reflected from the first sensing transmitting node to the sensing receiving node via the sensing target comprises:
a first transmission delay being greater than a fourteenth threshold;
wherein the first transmission delay is the transmission delay corresponding to the path through which the sensing reference signal is reflected from the first sensing transmitting node to the sensing receiving node via the sensing target.

34. The method according to claim 31, wherein the initiation condition related to the position of the first sensing transmitting node comprises at least one of:
a position of the sensing target leaving a first area;
a position of the sensing receiving node leaving a first area; or
a position of the sensing target leaving a first area, and a position of the sensing receiving node leaving the first area;
wherein the first area corresponds to the position of the first sensing transmitting node.

35. The method according to claim 31, wherein the initiation condition related to the distance between the first sensing transmitting node and the sensing receiving node comprises:
the distance between the first sensing transmitting node and the sensing receiving node being greater than a fifteenth threshold.

36. The method according to claim 31, wherein the initiation condition related to the distance between the first sensing transmitting node and the sensing target comprises:
the distance between the first sensing transmitting node and the sensing target being greater than a sixteenth threshold.

37. The method according to claim 27, further comprising:
receiving a first notification transmitted by the sensing receiving node, wherein the first notification is used to notify the first sensing transmitting node to stop transmitting a sensing reference signal.

38. A node handover method, performed by a candidate sensing transmitting node and comprising:
transmitting second configuration information, wherein the second configuration information is used to indicate a transmission configuration of a sensing reference signal transmitted by the candidate sensing transmitting node;
wherein the transmission configuration is used for a sensing receiving node to perform measurement on the sensing reference signal; and in a case where a measurement result of the sensing reference signal meets a handover condition, a handover from a first sensing transmitting node to a second sensing transmitting node is performed, the second sensing transmitting node being one of candidate sensing transmitting nodes.

39. The method according to claim 38, further comprising:
receiving a second notification transmitted by the sensing receiving node;
wherein the second notification is used to notify the second sensing transmitting node that the sensing receiving node selects to use the second sensing transmitting node for performing sensing measurement.

40. A sensing receiving apparatus, comprising:
a switching module, configured to perform a handover from a first sensing transmitting apparatus to a second sensing transmitting apparatus in a case where a handover condition is met.

41. A first sensing transmitting apparatus, comprising:
a first transmitting module, configured to transmit third configuration information, wherein the third configuration information is used to configure a sensing receiving apparatus to perform a handover from the first sensing transmitting apparatus to a second sensing transmitting apparatus in a case where a handover condition is met.

42. A candidate sensing transmitting apparatus, comprising:
a second transmitting module, configured to transmit second configuration information, wherein the second configuration information is used to indicate a transmission configuration of a sensing reference signal transmitted by the candidate sensing transmitting apparatus;
wherein the transmission configuration is used for a sensing receiving node to perform measurement on the sensing reference signal; and in a case where a measurement result of the sensing reference signal meets a handover condition, a handover from a first sensing transmitting apparatus to a second sensing transmitting apparatus is performed, the second sensing transmitting apparatus is one of candidate sensing transmitting apparatuses.

43. A sensing receiving node, comprising:
a processor;
a transceiver connected to the processor;
a memory configured to store executable instructions of the processor;
wherein the processor is configured to load and execute the executable instructions, to implement the node handover method according to any one of claims 1 to 26.

44. A sensing transmitting node, comprising:
a processor;
a transceiver connected to the processor;
a memory configured to store executable instructions of the processor;
wherein the processor is configured to load and execute the executable instructions, to implement the node handover method according to any one of claims 27 to 39.

45. A computer-readable storage medium, wherein the computer-readable storage medium has a computer program stored therein, and the computer program is loaded and executed by a processor, to implement the node handover method according to any one of claims 1 to 39.

46. A computer program product, comprising computer instructions, wherein the computer instructions are stored in a computer-readable storage medium, a processor obtains the computer instructions from the computer-readable storage medium, loads and executes the computer instructions, to implement the node handover method according to any one of claims 1 to 39.

47. A computer program, comprising computer instructions, wherein the computer instructions are stored in a computer-readable storage medium, a processor obtains the computer instructions from the computer-readable storage medium, and loads and executes the computer instructions, to implement the node handover method according to any one of claims 1 to 39.
